(19) Europäisches Patentamt
European Patent Office
Office européen des brevets

(11) **EP 1 629 185 B1**

(12) **FASCICULE DE BREVET EUROPEEN**

(45) Date de publication et mention
de la délivrance du brevet:
**28.11.2007 Bulletin 2007/48**

(21) Numéro de dépôt: **04742678.8**

(22) Date de dépôt: **07.05.2004**

(51) Int Cl.:
***F02D 21/04*** *(2006.01)* ***F02D 21/08*** *(2006.01)*

(86) Numéro de dépôt international:
**PCT/FR2004/001120**

(87) Numéro de publication internationale:
**WO 2004/099591 (18.11.2004 Gazette 2004/47)**

(54) **PROCEDE DE PILOTAGE D'UN MOTEUR THERMIQUE**

STEUERVERFAHREN EINER BRENNKRAFTMASCHINE

HEAT ENGINE CONTROL METHOD

(84) Etats contractants désignés:
**AT BE BG CH CY CZ DE DK EE ES FI FR GB GR
HU IE IT LI LU MC NL PL PT RO SE SI SK TR**

(30) Priorité: **07.05.2003 FR 0305580**

(43) Date de publication de la demande:
**01.03.2006 Bulletin 2006/09**

(73) Titulaire: **RENAULT S.A.S.
92100 Boulogne Billancourt (FR)**

(72) Inventeurs:
• **DUCLOS, Jean-Marc
F-91470 Forges-les-Bains (FR)**
• **GUEZET, Jacky
F-50370 Les Cresnays (FR)**
• **SERVANT, Cédric
91310 Montlhery (FR)**

(56) Documents cités:
**US-A- 4 625 702        US-A- 5 377 651
US-A1- 2002 100 466        US-B1- 6 176 227
US-B1- 6 370 935**

**Description**

La présente invention concerne, de façon générale, un procédé d'optimisation de la quantité d'EGR (gaz brûlés recyclés en externe) appliqué à un moteur thermique à allumage par compression.

Plus particulièrement, l'invention concerne un procédé de pilotage d'un moteur thermique à fonctionnement cyclique tel qu'un moteur diesel à injection directe, comprenant notamment une chambre de combustion, des moyens d'injection de carburant dans la chambre, des moyens d'admission pour admettre sélectivement dans la chambre un comburant gazeux contenant de l'air, des moyens d'échappement pour autoriser sélectivement l'échappement de gaz brûlés hors de la chambre et des moyens de recyclage incluant un premier moyen de contrôle de débit pour recycler des gaz brûlés, ce moyen de contrôle de débit étant piloté par un signal de commande [Com] variable, le débit de gaz recyclé étant représenté par une fonction croissante de la valeur du signal de commande, un moyen de mesure de la consommation du moteur en carburant.

L'utilisation de gaz dits de recirculation ou EGR ou gaz recyclés dans la chambre de combustion d'un moteur alternatif et plus particulièrement d'un moteur à allumage par compression est bien connue de l'homme du métier. Les gaz recyclés sont des gaz issus de la combustion des cycles précédents et sont donc appauvris en oxygène. Ils sont utilisés, mélangés avec l'air, pour réduire les émissions polluantes ou pour contrôler le déroulement de la combustion. Plus précisément le temps d'allumage d'un mélange air / carburant contenant des gaz recyclés est plus important que celui d'un mélange équivalent n'en contenant pas. Il est donc possible de retarder l'allumage d'un mélange air /carburant en y adjoignant des gaz recyclés jusqu'à une limite maximale de concentration au-delà de laquelle la combustion du carburant sera difficile et incomplète au risque de produire des particules polluantes.

On parle d'EGR externe lorsque l'alimentation en gaz recyclés s'effectue par un circuit localisé hors de la chambre de combustion et d'EGR interne lorsque ces gaz résiduels de la combustion sont restés piégés dans la chambre de combustion. L'invention proposée se rapporte principalement à la gestion de l'EGR externe et au procédé de contrôle du débit de gaz recyclé admis dans la chambre pour obtenir les effets désirés.

C'est la raison pour laquelle de nombreux motoristes ont développé diverses solutions visant à contrôler l'adjonction de gaz recyclés dans la chambre de combustion.

Un moteur du type précédemment défini, permettant un tel contrôle du débit de gaz recyclés introduit dans une chambre de combustion, est par exemple décrit dans le document brevet US 5,150,694 de GENERAL MOTORS CORPORATION.

Ce document divulgue un moteur comportant une chambre de combustion, un moyen d'admission, une sortie d'échappement et un moyen de recyclage de gaz à l'admission, les gaz brûlés recyclés étant collectés à l'échappement.

Le débit de gaz recyclés dans la chambre de combustion est contrôlé par une vanne pilotée par un calculateur.

La quantité de carburant injectée dans la chambre est contrôlée par une pompe d'injection pilotée par ce même calculateur.

Un capteur de débit d'air situé à l'admission permet de mesurer la quantité d'air admise dans la chambre.

Un capteur de mesure du ratio air/carburant des gaz d'échappement est placé sur la sortie d'échappement de manière à déterminer si la combustion de carburant est totale ou partielle.

Par exemple, lorsque la quantité d'air détectée en sortie d'échappement est trop importante par rapport à la quantité de carburant injecté, l'ordinateur de bord augmente la quantité de gaz recyclé afin de réduire la teneur en oxygène du mélange comburant et ainsi améliorer le rendement du moteur et réduire les émissions polluantes de monoxyde d'azote dues à un excès d'oxygène actif dans la chambre de combustion.

Ce procédé de contrôle du débit de gaz recyclés permet donc d'améliorer le rendement du moteur et réduire la pollution par gaz d'échappement contenant des carburants non brûlés ou des oxydes d'azote. Pour cela, ce procédé se base sur la mesure du ratio air /carburant des gaz d'échappement. Or, le ratio air /carburant est un indicateur partiel du fonctionnement du moteur et ne constitue pas une mesure directe du rendement du moteur qui est la mesure primordiale pour le contrôle d'un moteur.

Dans ce contexte, la présente invention a pour but de proposer un procédé de pilotage d'un moteur thermique permettant de contrôler la quantité de gaz recyclés en vue d'améliorer le rendement du moteur.

A cette fin, le procédé de pilotage d'un moteur thermique de l'invention, par ailleurs conforme à la définition générique qu'en donne le préambule ci-dessus, est essentiellement caractérisée en ce qu'il comporte en outre une étape d'évaluation d'une variation de rendement du moteur sur un intervalle de temps révolu résultant d'une variation du signal de commande, et une étape de réactualisation du signal de commande, consistant à faire évoluer le signal de commande dans un sens propre à maximiser le rendement du moteur sur un nouvel intervalle de temps à venir.

Ce procédé selon l'invention consiste donc à mesurer ou évaluer la variation de rendement du moteur sur un intervalle de temps et corréler cette information avec la variation du signal de commande du moyen de contrôle de débit de gaz recyclés sur ce même intervalle.

Ainsi, lorsque le rendement du moteur augmente sur un intervalle de temps révolu, la tendance du signal de commande sur l'intervalle de temps à venir sera soit amplifiée soit au moins maintenue constante par rapport à la tendance du signal de commande de l'intervalle de temps révolu.

Dans le cas contraire, lorsque le rendement du moteur diminue sur un intervalle de temps révolu, la tendance du signal de commande sur l'intervalle de temps à venir sera soit inversée soit au moins réduite par rapport à la tendance du signal de commande de l'intervalle de temps révolu.

Il résulte de cette situation que le rendement du moteur au cours du nouvel intervalle de temps sera soit augmenté soit maintenu constant par rapport au rendement du moteur sur l'intervalle de temps révolu. Ce procédé permet ainsi de maximiser le rendement du moteur par le contrôle du débit de gaz recyclé.

Pour illustrer ce dernier cas, on peut par exemple se trouver dans la situation où le rendement moteur sur l'intervalle de temps révolu diminue alors que dans le même temps le signal de commande du moyen de contrôle avait augmenté. Dans ce cas, on peut réduire le signal de commande pour le nouvel intervalle de temps à venir de façon à diminuer le débit de gaz recyclé sur le nouvel intervalle par rapport au débit de gaz recyclé durant l'intervalle de temps révolu. Ainsi le taux de gaz recyclé dans la chambre sera réduit et le taux d'oxygène actif sera augmenté. L'augmentation du ratio Air / carburant induit corrélativement une meilleure combustion du carburant et donc une augmentation du rendement moteur.

Selon un exemple particulier de réalisation de l'invention, l'étape d'évaluation de variation de rendement consiste dans un premier temps à calculer des rendements du moteur pour des premiers et seconds intervalles de temps respectifs, le second intervalle de temps se terminant postérieurement au premier intervalle, chaque rendement calculé correspondant au rapport entre la quantité de travail et la quantité de carburant injectée pour chaque intervalle, puis dans un second temps à calculer le signe algébrique du rapport :

```
(Rendement Moteur durant le second intervalle -
Rendement moteur durant le premier intervalle) /
(Valeur du Signal de commande de débit de gaz brûlé
recyclé durant le second intervalle - Valeur du Signal
de commande de débit de gaz brûlé recyclé durant le
premier intervalle)
```

puis dans un troisième temps, l'étape de réactualisation du signal de commande Com consiste à augmenter le signal de commande Com si le signe algébrique du rapport est positif et à réduire le signal de commande Com si le signe algébrique du rapport est négatif, de telle manière que le débit de gaz brûlés recyclés soit contrôlé pour maximiser le rendement du moteur.

D'autres caractéristiques et avantages de l'invention ressortiront clairement de la description qui en est faite ci-après, à titre indicatif et nullement limitatif, en référence aux dessins annexés, dans lesquels:

la figure 1 représente le procédé d'optimisation de la quantité de gaz recyclé admise dans une chambre de combustion ;
la figure 2 représente un procédé complémentaire d'optimisation de la stratification en gaz recyclé admise dans une chambre de combustion ;
la figure 3 représente un moteur à combustion possédant des moyens de contrôle de débit de gaz recyclés pour chaque chambre de combustion ;
la figure 4 représente un moteur à combustion possédant des moyens de contrôle de débit de gaz recyclés communs à plusieurs chambres de combustion.

Comme annoncé précédemment, l'invention concerne un procédé de pilotage d'un moteur thermique à fonctionnement cyclique tel qu'un moteur diesel à injection directe.

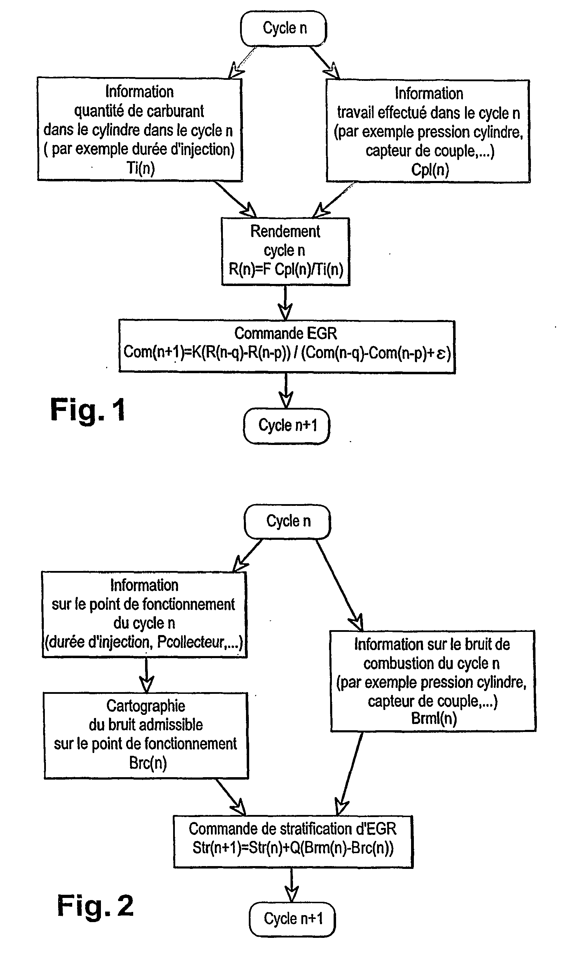

La figure 1 représente un exemple de réalisation du procédé selon l'invention.

Ce procédé est une boucle de contrôle permettant d'ajuster le débit et par conséquent le taux de gaz brûlés recyclés dans la chambre de combustion afin de maximiser le rendement du moteur.

Deux paramètres de fonctionnement du moteur sont mesurés. Il s'agit d'une part de la variation de travail effectué par le moteur sur un intervalle de temps et d'autre part de la quantité de carburant consommée sur ce même intervalle de temps.

L'intervalle de temps de mesure correspond préférentiellement à un nombre de cycles moteurs et la mesure est préférentiellement moyennée sur plusieurs cycles moteur afin lisser les résultats des mesures.

Les mesures de variation du travail effectué par le moteur et de variation de la quantité de carburant consommée sur l'intervalle de temps sont transmises à un calculateur qui détermine la variation ou la moyenne de la variation du rendement.

Conformément à l'exemple de la figure 1, le rendement R(n) du moteur pour le cycle n est obtenu par le rapport entre le couple Cpl(n) développé par le moteur et la quantité de carburant Ti(n) injectée durant le cycle n. Le rendement calculé R(n) peut également être corrigé à l'aide d'une fonction de correction F cartographiée. Cette fonction de correction F est une relation bijective entre un état de commande ou un état de fonctionnement du moteur et la correction à appliquer à R(n). Cette fonction F varie selon des effets environnementaux connus et préalablement mesurés. Préférentiellement, cette fonction de correction F prend en compte la sensibilité du rendement R à la commande Com de débit en gaz recyclés.

Le travail relatif ou couple Cpl(n) fourni par une chambre de combustion ou par plusieurs chambres pour un cycle n donné est mesuré à l'aide d'un capteur de pression de la chambre de combustion et/ou d'un capteur de couple moteur placé sur le vilebrequin. Ce couple Cpl(n) peut être calculé par la mesure de l'effort développé sur le vilebrequin ou par la mesure de l'accélération du vilebrequin corrélée avec la pression de gaz à l'intérieur de la chambre.

La quantité de carburant consommée sur un cycle n est notée Ti(n) et est mesurée de façon directe avec un débitmètre et/ou de façon indirecte à l'aide de la durée -de commande de l'injecteur et de la pression du carburant injecté. La quantité de carburant calculée par mesure indirecte peut être corrigée en fonction de la température du carburant et/ou de la pression à l'intérieur de la chambre.

Le calculateur détermine alors le nouveau signal de commande Com(n+1) à envoyer au moyen de contrôle de débit de gaz à recycler pour le cycle (n+1) à venir.

La nouvelle valeur du nouveau signal de commande Com (n+1) est fonction du rapport entre la variation de rendement mesurée entre deux cycles moteurs successifs respectivement appelés cycle p et cycle q.

La variation de rendement moteur entre le cycle p et le cycle q est calculée en soustrayant le rendement mesuré R(n-q) au rendement mesuré R(n-p).

La variation de la valeur du signal de commande entre les cycles p et q est calculée en soustrayant la valeur de la commande Com(n-p) à la valeur de la commande Com(n-q).

Enfin la nouvelle valeur du nouveau signal de commande Com (n+1) est calculée par le rapport entre la variation de rendement moteur et la variation de la commande précédemment calculées.

On peut également obtenir ce résultat Com(n+1) par une fonction de correction K tenant compte des facteurs d'environnement du moteur précédemment mentionnés.

La nouvelle commande Com(n+1) est alors transmise vers le moyen de contrôle de débit de gaz recyclé pour ajuster le débit de gaz recyclé lors du cycle (n+1) à venir.

Ce processus de contrôle du rendement est répété pour les cycles moteurs ultérieurs.

Le moyen de contrôle du débit de gaz recyclés peut être en tout ou rien ou être variable en continu sur une plage de débit allant d'un débit nul à un débit maximum admissible par le moteur.

La figure 2 représente un procédé complémentaire de réalisation de l'invention destiné à maintenir le bruit du moteur en dessous d'un seuil maximum de bruit admissible. Le bruit de combustion est lié à la vitesse de combustion, c'est à dire à la vitesse à laquelle l'énergie issue de l'oxydation du combustible par le comburant est libérée.

Dans ce mode de réalisation particulier, la chambre de combustion est alimentée par au moins deux veines fluides ayant chacune un taux de gaz recyclés régulé par les moyens de contrôle de débit et par le procédé décrit précédemment. Ces deux veines fluides alimentent une chambre de combustion et forment ainsi des strates de fluides contenant de l'air et des proportions de gaz recyclés variables. Préférentiellement, le taux de gaz recyclés d'une strate est fonction de son taux de charge en carburant.

Chaque strate de fluide ainsi créée possède son propre taux de gaz recyclé, et donc son propre délai d'allumage et sa propre vitesse de combustion ce qui permet d'étaler le temps de la combustion dans l'ensemble de la chambre.

Corrélativement la régulation des taux de gaz recyclés dé chaque strate et du différentiel de taux de gaz recyclés entre les strates permet le pilotage de la vitesse de combustion et la réduction du bruit de combustion. On peut par exemple contrôler la vitesse de combustion en faisant varier l'écart entre les deux valeurs des taux de gaz recyclés de chacune des deux veines fluides.

En résumé, le procédé de la figure 1 permet de contrôler le débit de gaz recyclés afin de maximiser le rendement du moteur et le procédé de la figure 2 permet de contrôler la manière d'admettre ce gaz recyclé dans la chambre et réduire le bruit du moteur.

La combinaison de ces deux procédés permet donc de maximiser le rendement du moteur tout en contrôlant son niveau de bruit.

Le procédé de la figure 2 consiste à contrôler le bruit du moteur par une fonction dite de stratification ou de création de strates de fluides à taux de gaz recyclés variables d'une strate à l'autre.

Plus précisément, le procédé de contrôle en boucle fermée de la figure 2 consiste en une première étape au cycle n de mesure du bruit Brm(n) émis par le moteur.

La mesure du bruit du moteur peut se faire par toute technique permettant de détecter la vitesse de combustion de la chambre. Pour se faire on peut détecter l'intervalle de temps où la pression à l'intérieur de la chambre monte brusquement. Cette mesure peut être notamment effectuée à l'aide d'un capteur de couple transmis par le vilebrequin, à l'aide d'un capteur de pression à l'intérieur de la chambre en dérivant les signaux mesurés. Cette mesure peut également être effectuée à l'aide d'un accéléromètre placé sur la culasse ou le vilebrequin en recherchant la valeur maximale de l'accélération.

Une seconde étape de collecte d'informations sur le point de fonctionnement du moteur est réalisée durant le même intervalle de temps que l'étape de mesure de bruit Brm(n). Le point de fonctionnement correspond principalement à la quantité de carburant injectée pour un régime moteur donné. D'autres informations sur le point de fonctionnement du moteur au cycle n peuvent également être collectées afin de déterminer un état du moteur.

Une base de données cartographique sert de référence pour indiquer quel est le bruit moteur maximum admissible cartographié Brc(n) correspondant à un état du moteur mesuré au cycle n.

Le calculateur compare alors le bruit maximum admissible Brc(n) pour le point de fonctionnement moteur au cycle n avec le bruit moteur mesuré Brm(n) pour ce même cycle n.

Si le bruit moteur mesuré Brm(n) est supérieur au bruit moteur maximum admissible cartographié Brc(n), alors le calculateur augmente la nouvelle valeur de commande de stratification Str (n+1) pour le cycle à venir n+1 par rapport à la valeur de la commande de stratification Str (n) du cycle n. L'augmentation de la valeur de la commande de stratification permet de créer des strates de gaz ayant des taux de concentration en gaz recyclés différents et corrélativement des vitesses de combustion différentes. La combustion est donc étalée dans le temps ce qui permet de réduire le bruit du moteur.

Si le bruit mesuré Brm(n) est inférieur au bruit moteur maximum admissible cartographié Brc(n), alors le calculateur réduit la nouvelle valeur de commande de stratification Str (n+1) pour le cycle à venir (n+1) par rapport à la valeur de la commande de stratification Str (n) du cycle n. La réduction de la valeur de la commande de stratification Str (n+1) permet de réduire la différence de concentration en gaz recyclés de chaque strate de la chambre et corrélativement augmenter la vitesse de combustion.

Ce procédé de contrôle du bruit peut alors être répété pour des cycles moteurs ultérieurs.

La commande de stratification de ce procédé peut être fondée sur un seul cycle n, ou sur une moyenne de cycles, elle peut s'appliquer au cycle immédiatement successif à la mesure ou aux mesures, ou être retardée de plusieurs cycles. Elle peut également s'appliquer chambre à chambre ou sur un ensemble de chambres.

La fonction de stratification peut être une fonction tout ou rien ou être une fonction variable continue proportionnellement à l'écart entre le bruit mesuré Brm(n) et le bruit cartographié Brc(n).

Les deux procédés de contrôle du rendement et du bruit permettent de maximiser le rendement tout en limitant le bruit.

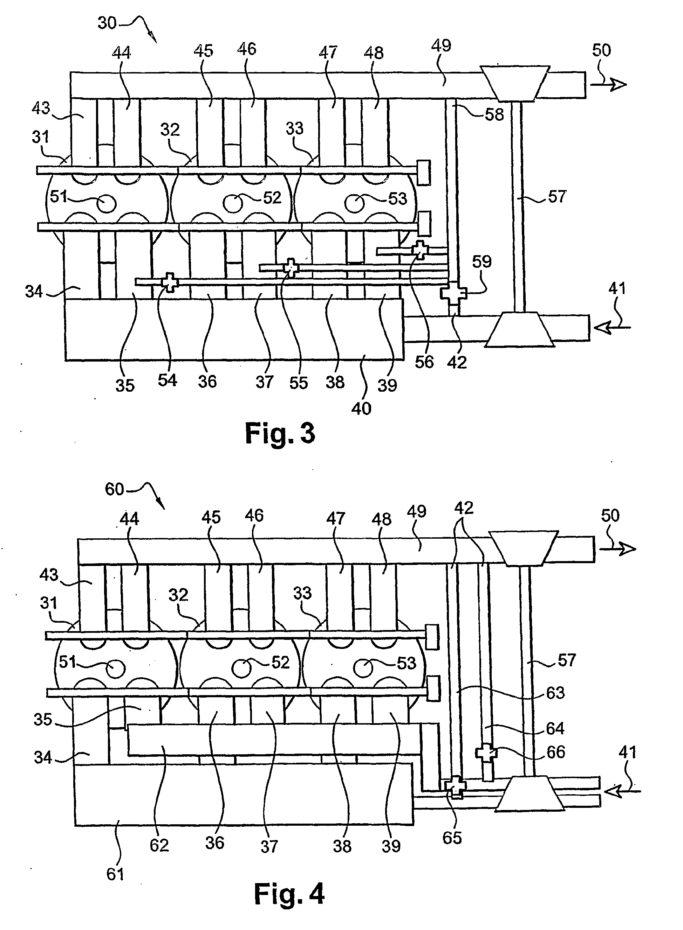

Les figures 3 et 4 représentent respectivement deux exemples de moteurs 30 et 60 dotés de circuits de contrôle du recyclage de gaz brûlés pour la mise en oeuvre de l'un au moins des procédés précédemment décrits. Chacun de ces moteurs 30, 60 possède trois cylindres ou chambres de combustion 31, 32, 33. Chaque chambre 31, 32, 33 comporte un injecteur de carburant 51, 52, 53 ainsi que deux entrées d'admission respectivement 34 à 39, séparées l'une de l'autre pour introduire dans chaque chambre deux veines fluides séparées. Chaque veine fluide peut comporter une proportion variable dans le temps de gaz brûlés recyclés de manière à former des strates de gaz dans la chambre.

Les première, deuxième et troisième chambres de combustion 31, 32, 33 possèdent chacune des première et seconde sorties d'échappement de gaz brûlés 50 respectivement 43 à 48.

L'ensemble de ces sorties d'échappement 43 à 48 sont connectées à une sortie principale d'échappement 49.

Chacun des moteurs 30, 60 des figures 3 et 4 est doté d'un turbo 57 et d'un moyen de recyclage permettant de collecter une partie des gaz d'échappement 50 pour les introduire au niveau de l'admission.

Les entrées d'admission 34 à 39 du moteur 30 de la figure 3 sont connectées à une admission principale 40 pour l'admission d'air 41 et de gaz brûlés recyclés 42.

L'admission principale 40 est elle-même reliée à la sortie principale d'échappement 49 par l'intermédiaire d'un moyen de recyclage 58 de gaz brûlés 42.

Le moyen de recyclage 30 comporte une vanne de contrôle 59 du taux de gaz brûlés recyclés dans l'admission principale 40. Cette vanne 59 permet donc de contrôler le débit de gaz brûlés pour l'ensemble des entrées d'admission 34 à 39 et des chambres de combustion 31 à 33 et cela par un seul moyen de contrôle de débit.

Des première, deuxième et troisième vannes de stratification 54 à 56 relient respectivement le moyen de recyclage 58 de gaz brûlés aux secondes entrées d'admission 35, 37, et 39.

Chacune de ces trois vannes de stratification 54 à 56 contrôle individuellement la stratification de chacune des chambres respectives 31 à 33.

Par exemple, la première vanne de stratification 54 permet l'admission de gaz recyclés dans la veine fluide transitant par la deuxième entrée d'admission. La veine fluide transitant par la seconde entrée 35 a donc un taux de gaz recyclé variable et contrôlé par la première vanne de contrôle de stratification 54 et/ou par la vanne de contrôle de taux 59.

La veine fluide transitant par la première entrée 34 a un taux de gaz recyclé variable qui est uniquement contrôlé par la vanne de contrôle de taux 59.

Le différentiel de concentration en gaz recyclés dans la première chambre 31 peut donc être ajusté en jouant sur la première vanne de stratification 54.

Le moteur 60 de la figure 4 permet le contrôle simultané et centralisé pour l'ensemble des chambres du débit de gaz recyclés ainsi que leurs stratifications.

Le moteur 60 de cette figure comporte des première et seconde entrées principales d'admission 61 et 62.

Les première et secondes entrées principales d'admission 61 et 62 sont reliées à la sortie principale d'échappement 49 par l'intermédiaire d'un premier moyen de recyclage 63 pour la première entrée principale 61 et d'un second moyen de recyclage 64 pour la seconde entrée principale 62.

La première entrée principale 61 est reliée aux premières entrées d'admission 34, 36, 38 permettant ainsi l'admission de premières veines fluides ayant le même taux de concentration en gaz recyclés.

La seconde entrée principale 62 est reliée aux secondes entrées d'admission 35, 37, 39 permettant ainsi l'admission de secondes veines fluides ayant le même taux de concentration en gaz recyclés.

Les débits respectifs en gaz recyclés des première et seconde entrées principales d'admission 61 et 62 sont indépendamment et respectivement contrôlés par des première et seconde vannes 65 et 66.

Ce montage particulier permet de contrôler le taux de gaz recyclé dans toutes les chambres par deux vannes.

Ces deux vannes permettent également le contrôle de la stratification en jouant sur le différentiel de débit en gaz recyclé 42 passant par les premier et second moyens de recyclage 63 et 64.

De la même manière que pour le moteur 30 de la figure 3, les moyens de contrôle de débit des gaz d'échappement recyclés sont constitués de vannes commandées par au moins un moyen de commande pneumatique, hydraulique ou électrique. Ces vannes peuvent délivrer un débit de gaz continu ou discontinu.

## Revendications

1. Procédé de pilotage d'un moteur thermique à fonctionnement cyclique (30) tel qu'un moteur diesel à injection directe, comprenant notamment

   une chambre de combustion (31),

   des moyens d'injection de carburant (51) dans la chambre,

   des moyens d'admission (34, 35) pour admettre sélectivement dans la chambre un comburant gazeux contenant de l'air (41),

   des moyens d'échappement (43, 44) pour autoriser sélectivement l'échappement de gaz brûlés (50) hors de la chambre (31) et

   des moyens de recyclage (58) incluant

   un premier moyen de contrôle de débit (59) pour recycler des gaz brûlés (42), ce moyen de contrôle de débit étant piloté par un signal de commande [Com] variable, le débit de gaz recyclés étant représenté par une fonction croissante de la valeur du signal de commande,

   un moyen de mesure de la consommation du moteur en carburant,

   le procédé étant **caractérisé en ce qu'**il comporte en outre une étape d'évaluation d'une variation de rendement du moteur (30) sur un intervalle de temps révolu résultant d'une variation du signal de commande, et une étape de réactualisation du signal de commande, consistant à faire évoluer le signal de commande dans un sens propre à maximiser le rendement du moteur sur un nouvel intervalle de temps à venir.

2. Procédé selon la revendication 1, **caractérisé en ce que** l'étape d'évaluation de variation de rendement consiste dans un premier temps à calculer des rendements du moteur pour des premier et second intervalles de temps respectifs, le second intervalle de temps se terminant postérieurement au premier intervalle, chaque rendement calculé correspondant au rapport entre la quantité de travail et la quantité de carburant injectée pour chaque intervalle, puis dans un second temps à calculer le signe algébrique du rapport :

```
    (Rendement Moteur durant le second intervalle -
Rendement moteur durant le premier intervalle) /
(Valeur du Signal de commande de débit de gaz brûlé
recyclé durant le second intervalle - Valeur du Signal
de commande de débit de gaz brûlé recyclé durant le
premier intervalle)
```

puis dans un troisième temps **en ce que** l'étape de réactualisation du signal de commande consiste à augmenter le signal de commande Com(n+1) si le signe algébrique du rapport est positif et à réduire le signal de commande Com(n+1) si le signe algébrique du rapport est négatif, de telle manière que le débit de gaz brûlés (42) recyclés soit contrôlé pour maximiser le rendement du moteur (30).

3. procédé selon l'une quelconque des revendications précédentes, **caractérisé en ce que** l'étape d'évaluation de variation de rendement du moteur est réalisée sur un intervalle de temps révolu de plusieurs cycles moteur de manière à ce que la valeur du signal de commande Com (n+1) soit moyennée sur plusieurs cycles moteur.

4. Procédé selon l'une quelconque des revendications précédentes, **caractérisé en ce que** les moyens d'admission comportent des première et seconde entrées d'admission de comburant gazeux dans la chambre, permettant l'admission respective dans la chambre d'une première et d'une seconde veine fluide de comburants gazeux.

5. Procédé selon la revendication 4, **caractérisé en ce que** le moyen de recyclage (58) comporte un second moyen de contrôle de débit (54) de gaz recyclés dans la seconde veine fluide de manière à contrôler indépendamment le débit de gaz recyclé dans chacune des veines fluides et ainsi former dans la chambre (31) plusieurs strates de gaz comburants ayant chacune un taux de concentration en gaz recyclés qui soit variable.

6. Procédé selon l'une quelconque des revendications précédentes, **caractérisé en ce que** chaque cycle du moteur comporte une phase d'admission au cours de laquelle le débit de gaz recyclés admis est variable de manière à former plusieurs strates de gaz comburant ayant chacune un taux de concentration en gaz recyclés variable dans le temps.

7. Procédé selon l'une quelconque des revendications précédentes, **caractérisé en ce que** le moyen de mesure de la consommation de carburant est un débitmètre ou un moyen de mesure de la durée d'injection de carburant.

8. Procédé selon l'une quelconque des revendications précédentes, **caractérisé en ce que** le moteur comporte des moyens de mesure de la quantité de travail produite par le moteur, ces moyens étant un capteur de pression de gaz dans la chambre et/ou un capteur de couple du moteur.

9. Moteur thermique qui met en oeuvre le procédé selon l'une quelconque des revendications 1 à 8, **caractérisé en ce que** le moteur comprend au moins des première et deuxième chambres de combustion (31, 32) ayant chacune une première (34, 36) et une seconde (35, 37) entrées d'admission, chaque première entrée permettant l'admission d'une première veine fluide et chaque seconde entrée permettant l'admission d'une seconde veine fluide, lesdites premières entrées étant alimentées par une première entrée principale (40 ou 61) pour recycler des gaz brûlés (42) selon un débit en gaz recyclé piloté par le premier moyen de contrôle de débit (59 ou 65), ce débit étant identique pour toute les premières veines fluides respectivement admises dans les chambres de combustion (31, 32), le moteur comportant en outre un second moyen de contrôle de débit (54, 66) de gaz recyclés dans une seconde veine fluide de manière à contrôler indépendamment le débit de gaz recyclé dans les veines fluides.

10. Moteur thermique selon la revendication 9, **caractérisé en ce que** le débit en gaz brûlé dans la seconde veine fluide admise dans la première chambre (31) est contrôlé par une première vanne de contrôle de stratification (54) et le débit en gaz brûlé dans la seconde veine fluide introduite dans la deuxième chambre (32) est contrôlé par une deuxième vanne de contrôle de stratification (55).

11. Moteur thermique selon la revendication 9, **caractérisé en ce que** lesdites secondes entrées (35, 37) sont alimentées

7

par une seconde entrée principale (62) pour recycler des gaz brûlés (42) selon un débit en gaz brûlé contrôlé par le second moyen de contrôle de débit (66), ce second moyen de contrôle de débit (66) étant commun à toutes les secondes veines fluides respectivement admises dans les chambres de combustion (31, 32).

**Claims**

1. Method of managing a cyclically-operating combustion engine (30) such as a direct-injection diesel engine, comprising in particular:

   a combustion chamber (31),
   fuel injection means (51) for injecting fuel into the chamber,
   inlet means (34, 35) for selectively admitting an air-containing gaseous oxidant (41) into the chamber,
   exhaust means (43, 44) for selectively exhausting burnt exhaust gases (50) from the chamber (31) and recirculation means (58) including
   a first EGR flow control means (59) for recirculating exhaust gases (42), this flow control means being managed by a variable control signal [Com], the EGR flow rate being represented by an increasing function of the value of the control signal,
   an engine fuel consumption measurement means,
   the method being **characterized in that** it further comprises a step of evaluating a variation in the efficiency of the engine (30) over a completed time interval resulting from a variation in the control signal, and a step of updating the control signal, which consists in changing the control signal in a direction liable to maximize the efficiency of the engine over a new forthcoming time interval.

2. Method according to Claim 1, **characterized in that** the step of evaluating the variation in efficiency consists first of all in calculating engine efficiencies for first and second respective time intervals, the second time interval ending after the first interval, each calculated efficiency corresponding to the ratio between the amount of work and the amount of fuel injected in each interval,
   and then, secondly, in calculating the algebraic sign of the ratio:

   ```
   (engine  efficiency  during  the  second  interval
   minus engine efficiency during the first interval)
   / (value  of  the  EGR  flow  rate  control  signal
   during the second interval minus value of the EGR
   flow  rate  control  signal  during  the  first
   interval)
   ```

   and then, thirdly, **in that** the step of updating the control signal consists in increasing the control signal Com(n+1) if the algebraic sign of the ratio is positive and in reducing the control signal Com(n+1) if the algebraic sign of the ratio is negative, so that the EGR (42) flow rate is controlled in such a way as to maximize the efficiency of the engine (30).

3. Method according to either one of the preceding claims, **characterized in that** the step of evaluating the variation in efficiency of the engine is performed over a completed time interval lasting several engine cycles so that the value of the control signal Com(n+1) is averaged over several engine cycles.

4. Method according to any one of the preceding claims, **characterized in that** the inlet means comprise first and second inlets for admitting gaseous oxidant into the chamber, respectively admitting first and second fluid streams of gaseous oxidant into the chamber.

5. Method according to Claim 4, **characterized in that** the recirculation means (58) comprises a second EGR flow control means (54) in respect of gases recirculated in the second fluid stream so as to control the EGR flow rate independently in each of the fluid streams and thus form within the chamber (31) several strata of oxidizing gases each having a variable recirculated-gas concentration.

6. Method according to any one of the preceding claims, **characterized in that** each engine cycle comprises an admission phase during which the flow rate of recirculated gases admitted can vary so as to form several strata of oxidizing gases each having a recirculated-gas concentration that can vary over time.

7. Method according to any one of the preceding claims, **characterized in that** the means of measuring fuel consumption is a flow meter or a means of measuring the fuel injection period.

8. Method according to any one of the preceding claims, **characterized in that** the engine comprises means for measuring the amount of work which is produced by the engine, these means being a pressure sensor sensing the pressure of the gases in the chamber and/or an engine torque sensor.

9. Combustion engine which implements the method according to any one of Claims 1 to 8, **characterized in that** the engine comprises at least first and second combustion chambers (31, 32) each having a first (34, 36) and a second (35, 37) inlet, each first inlet being for admitting a first fluid stream and each second inlet being for admitting a second fluid stream, the said first inlets being fed via a first main EGR inlet (40 or 61) for recirculating burnt exhaust gases (42) at an EGR flow rate managed by the first flow control means (59 or 65), this flow rate being identical for all the first fluid streams respectively admitted to the combustion chambers (31, 32), the engine further comprising a second EGR flow control means (54, 66) for controlling the gases recirculated in a second fluid stream so that the EGR flow rate in the fluid streams can be controlled independently.

10. Combustion engine according to Claim 9, **characterized in that** the EGR flow rate in the second fluid stream admitted to the first chamber (31) is controlled by a first stratification control valve (54) and the EGR flow rate in the second fluid stream let into the second chamber (32) is controlled by a second stratification control valve (55).

11. Combustion engine according to Claim 9, **characterized in that** the said second inlets (35, 37) are fed via a second main EGR inlet (62) for recirculating burnt exhaust gases (42) at an EGR flow rate controlled by the second flow control means (66), this second flow control means (66) being common to all the second fluid streams respectively admitted to the combustion chambers (31, 32).

**Patentansprüche**

1. Verfahren zum Steuern eines Wärmekraftmotors mit zyklischem Betrieb (30), wie ein Dieselmotor mit direkter Einspritzung, der insbesondere aufweist

   einen Brennraum (31),
   Kraftstoffeinspritzmittel (51) in den Raum,
   Ansaugmittel (34, 35), um selektiv einen Luft enthaltenden gasförmigen Sauerstoffträger (41) in den Raum anzusaugen,
   Auspuffmittel (43, 44), um selektiv den Austritt von Abgasen (50) aus dem Raum (31) zu erlauben, und
   Rückführungsmittel (58), die enthalten

   ein erstes Mittel zur Durchsatzüberwachung (59), um Abgase (42) rückzuführen, wobei dieses Durchsatzüberwachungsmittel von einem variablen Steuersignal [Com] gesteuert wird, wobei der Durchsatz von rückgeführten Gasen durch eine zunehmende Funktion des Werts des Steuersignals dargestellt wird,
   ein Mittel zum Messen des Kraftstoffverbrauchs des Motors,
   wobei das Verfahren **dadurch gekennzeichnet ist, dass** es außerdem einen Schritt der Bewertung einer Leistungsänderung des Motors (30) in einem abgelaufenen Zeitintervall, die aus einer Veränderung des Steuersignals resultiert, und einen Schritt der Reaktualisierung des Steuersignals aufweist, der darin besteht, das Steuersignal sich in einer Richtung entwickeln zu lassen, die geeignet ist, die Leistung des Motors in einem neuen folgenden Zeitintervall zu maximieren.

2. Verfahren nach Anspruch 1, **dadurch gekennzeichnet, dass** der Schritt der Bewertung einer Leistungsänderung erstens darin besteht, Leistungen des Motors für erste und zweite Zeitintervalle zu berechnen, wobei das zweite Zeitintervall nach dem ersten Zeitintervall endet, wobei jede berechnete Leistung dem Verhältnis zwischen der Arbeitsmenge und der für jedes Intervall eingespritzten Kraftstoffmenge entspricht,
zweitens darin besteht, das Vorzeichen des Verhältnisses zu berechnen:

$$\frac{\text{(Motorleistung während des zweiten Intervalls} - \text{Motorleistung während des ersten Intervalls)}}{\text{(Wert des Durchsatzsteuersignals von Abgas, das während des zweiten Intervalls rückgeführt wird} - \text{Wert des Durchsatzsteuersignals von Abgas, das während des ersten Intervalls rückgeführt wird)}}$$

dann drittens darin besteht, dass der Schritt der Reaktualisierung des Steuersignals darin besteht, das Steuersignal zu erhöhen Com(n+1), wenn das Vorzeichen des Verhältnisses positiv ist, und das Steuersignal Com(n+1) zu verringern, wenn das Vorzeichen des Verhältnisses negativ ist, so dass der Durchsatz an rückgeführten Abgasen (42) überwacht wird, um die Leistung des Motors (30) zu maximieren.

3. Verfahren nach einem der vorhergehenden Ansprüche, **dadurch gekennzeichnet, dass** der Schritt der Bewertung der Leistungsveränderung des Motors in einem abgelaufenen Zeitintervall von mehreren Motorzyklen durchgeführt wird, damit der Wert des Steuersignals Com (n+1) über mehrere Motorzyklen gemittelt wird.

4. Verfahren nach einem der vorhergehenden Ansprüche, **dadurch gekennzeichnet, dass** die Ansaugmittel erste und zweite Ansaugeingänge für gasförmigen Sauerstoffträger in den Raum aufweisen, die das Ansaugen eines ersten bzw. eines zweiten Fluidstroms von gasförmigen Sauerstoffträgern in den Raum erlauben.

5. Verfahren nach Anspruch 4, **dadurch gekennzeichnet, dass** das Rückführmittel (58) ein zweites Durchsatzüberwachungsmittel (54) von Abgasen im zweiten Fluidstrom aufweist, um unabhängig den Durchsatz von rückgeführtem Gas in jedem der Fluidströme zu überwachen und so in dem Raum (31) mehrere Schichten von oxidierenden Gasen zu formen, die je einen Konzentrationsgrad an rückgeführten Gasen haben, der variabel ist.

6. Verfahren nach einem der vorhergehenden Ansprüche, **dadurch gekennzeichnet, dass** jeder Zyklus des Motors eine Ansaugphase aufweist, während der der Durchsatz an angesaugten rückgeführten Gasen variabel ist, um mehrere Schichten von oxidierendem Gas zu formen, die je einen Konzentrationsgrad an rückgeführten Gasen aufweisen, der zeitlich variabel ist.

7. Verfahren nach einem der vorhergehenden Ansprüche, **dadurch gekennzeichnet, dass** das Mittel zum Messen des Kraftstoffverbrauchs ein Durchflussmesser oder ein Mittel zum Messen der Brennstoffeinspritzdauer ist.

8. Verfahren nach einem der vorhergehenden Ansprüche, **dadurch gekennzeichnet, dass** der Motor Mittel zum Messen der vom Motor erzeugten Arbeitsmenge aufweist, wobei diese Mittel ein Gasdrucksensor im Raum und/ oder ein Motordrehmomentsensor sind.

9. Wärmekraftmotor, der das Verfahren nach einem der Ansprüche 1 bis 8 anwendet, **dadurch gekennzeichnet, dass** der Motor mindestens erste und zweite Brennräume (31, 32) aufweist, die je einen ersten (34, 36) und einen zweiten (35, 37) Ansaugeingang aufweisen, wobei jeder erste Eingang das Ansaugen eines ersten Fluidstroms und jeder zweite Eingang das Ansaugen eines zweiten Fluidstroms erlaubt, wobei die ersten Eingänge von einem ersten Haupteingang (40 oder 61) gespeist werden, um Abgase (42) gemäß einem Durchsatz von rückgeführten Gasen rückzuführen, der vom ersten Durchsatzüberwachungsmittel (59 oder 65) gesteuert wird, wobei dieser Durchsatz für alle ersten Fluidströme gleich ist, die in die Brennräume (31, 32) angesaugt werden, wobei der Motor außerdem ein zweites Durchsatzüberwachungsmittel (54, 66) von rückgeführten Gasen in einem zweiten Fluidstrom aufweist, um unabhängig den Durchsatz an rückgeführtem Gas in den Fluidströmen zu überwachen.

10. Wärmekraftmotor nach Anspruch 9, **dadurch gekennzeichnet, dass** der Abgasdurchsatz im in den ersten Raum (31) angesaugten zweiten Fluidstrom von einem ersten Schichtungsüberwachungsventil (54) überwacht wird und der Abgasdurchsatz im in den zweiten Raum (32) angesaugten zweiten Fluidstrom von einem zweiten Schichtungsüberwachungsventil (55) überwacht wird.

11. Wärmekraftmotor nach Anspruch 9, **dadurch gekennzeichnet, dass** die zweiten Eingänge (35, 37) von einem zweiten Haupteingang (62) gespeist werden, um Abgase (42) gemäß einem Abgasdurchsatz rückzuführen, der vom zweiten Durchsatzüberwachungsmittel (66) überwacht wird, wobei dieses zweite Durchsatzüberwachungsmittel (66) allen zweiten Fluidströmen gemeinsam ist, die in die Brennräume (31, 32) angesaugt werden.

**Fig. 1**

**Fig. 2**

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 5150694 A